# EUROPÄISCHE PATENTSCHRIFT

(11) **EP 3 368 389 B1**
(45) Veröffentlichungstag und Bekanntmachung des Hinweises auf die Patenterteilung: **11.05.2022**
(21) Anmeldenummer: 16781319.5
(22) Anmeldetag: 04.10.2016
(51) Int. Cl.: B60W 30/18, B60W 10/11, B60W 10/06

(54) **VERFAHREN UND STEUERGERÄT ZUM BETREIBEN EINES KRAFTFAHRZEUGS**
METHOD AND CONTROL DEVICE FOR OPERATING A MOTOR VEHICLE
PROCÉDÉ ET DISPOSITIF DE COMMANDE DESTINÉS À FAIRE FONCTIONNER UN VÉHICULE À MOTEUR

(30) Priorität: 27.10.2015 DE 102015220999
(43) Veröffentlichungstag der Anmeldung: 05.09.2018
(73) Patentinhaber: ZF Friedrichshafen AG, 88046 Friedrichshafen (DE)
(72) Erfinder: SPOERL, Peter, 88214 Ravensburg (DE); KEMLER, Johannes, 88212 Ravensburg (DE); SCHULER, Franz-Josef, 88079 Kressbronn (DE)
(74) Vertreter: ZF Friedrichshafen AG
(86) Internationale Anmeldenummer: PCT/EP2016/073607
(87) Internationale Veröffentlichungsnummer: WO 2017/071913

(56) Entgegenhaltungen:
- EP-A1- 2 554 448
- DE-A1-102007 012 875
- DE-A1-102010 024 045
- DE-A1-102010 052 385
- DE-A1-102012 008 632

## Beschreibung

Die Erfindung betrifft ein Verfahren zum Betreiben eines Kraftfahrzeugs. Des Weiteren betrifft die Erfindung ein Steuergerät zur Durchführung des Verfahrens.

Aus der DE 10 2011 005 320 A1 ist ein Verfahren zum Betreiben eines Kraftfahrzeugs bekannt, welches ein Antriebsaggregat, ein Getriebe und einen Abtrieb umfasst, wobei das Getriebe zwischen das Antriebsaggregat und den Abtrieb geschaltet ist. Beim Getriebe handelt es sich um ein automatisches oder automatisiertes Schaltgetriebe. Nach der DE 10 2011 005 320 A1 wird abhängig von mindestens einer Betriebsbedingung des Kraftfahrzeugs ein Segelmodus für das Kraftfahrzeug aktiviert und nachfolgend abhängig von mindestens einer Betriebsbedingung des Kraftfahrzeugs der Segelmodus deaktiviert. Unter einem Segelmodus ist ein Betriebsmodus des Kraftfahrzeugs zu verstehen, in welchem im Fahrbetrieb bei laufendem oder stillstehenden Antriebsaggregat die Zugkraftübertragung im Getriebe hin zum Abtrieb unterbrochen ist. Im Segelmodus ist demnach das Antriebsaggregat vom Abtrieb abgekoppelt.

Nach der DE 10 2011 005 320 A1 wird während der Fahrt des Kraftfahrzeugs mit laufendem, an den Abtrieb angekoppeltem Verbrennungsmotor der Segelmodus dann aktiviert, wenn ein von einer fahrerseitigen Fahrpedalbetätigung abhängiges Fahrerwunschmoment oder ein von einem Fahrerassistenzsystem vorgegebenes Fahrmoment für eine definierte Zeit in einem definierten Bereich liegt und wenn weiterhin die aktuelle Beschleunigung oder Verzögerung des Kraftfahrzeugs in einem definierten Bereich liegt. Ferner offenbart die DE 10 2011 005 320 A1 diverse Bedingungen zum Deaktivieren eines zuvor aktivierten Segelmodus.

Aus der DE 10 2010 000 857 A1 ist ein weiteres Verfahren zum Betreiben eines Kraftfahrzeugs bekannt. So sind in diesem Stand der Technik einerseits Details eines Schaltablaufs für ein Gangauslegen während der Fahrt und andererseits Details eines Schaltablaufs für ein Gangeinlegen zum Ausstieg aus einem Segelbetrieb offenbart.

Aus der EP 2 554 448 A1 ist ein weiteres Verfahren zum Steuern eines Segelbetriebs eines Kraftfahrzeugs umfassend einen Verbrennungsmotor, ein automatisiertes Getriebe und eine im Kraftfluss zwischen Verbrennungsmotor und Getriebe angeordnete Kupplung bekannt. Hierbei ist vorgesehen, dass beim Einstieg in den Segelbetrieb die Kupplung geöffnet und der Verbrennungsmotor abgeschaltet wird, wobei während dieses Abstellvorgangs im Getriebe ein zur Motorleerlaufdrehzahl passender oder für einen Schleppstart des Verbrennungsmotors geeigneter Gang eingelegt wird, bevor der Verbrennungsmotor seine Selbstlauffähigkeit verliert. Hierdurch wird erreicht, dass im Falle einer oberhalb der Motor-Selbstlauffähigkeit der Verbrennungsmotor sofort ohne Starter nur durch Kraftstoffzufuhr wiedergestartet werden kann, und dass im Falle einer Fahrerwunschänderung unterhalb der Motor-Selbstlauffähigkeit der Verbrennungsmotor durch das Getriebe auf Leerlaufdrehzahl geschleppt werden kann, indem die Trennkupplung geschlossen wird und der Motor durch Kombination motorseitiger und getriebeseitiger Maßnahmen auf seine Zieldrehzahl gebracht wird.

Obwohl aus dem Stand der Technik bereits Verfahren bekannt sind, mit Hilfe derer definiert in einen Segelbetriebsmodus eingestiegen und andererseits definiert aus dem Segelbetriebsmodus ausgestiegen werden kann, besteht Bedarf daran, den Betrieb des Kraftfahrzeugs im Segelmodus zu verbessern, insbesondere derart, dass bei Ausstieg aus dem Segelbetrieb lange Wartezeiten sowie ggf. ein unkomfortables Gangeinlegen vermieden werden.

Hiervon ausgehend liegt der Erfindung die Aufgabe zu Grunde, ein neuartiges Verfahren zum Betreiben eines Kraftfahrzeugs und ein Steuergerät zum Betreiben eines Kraftfahrzeugs zu schaffen. Diese Aufgabe wird durch ein Verfahren gemäß Patentanspruch 1 sowie durch ein Verfahren gemäß Patentanspruch 2 gelöst. Erfindungsgemäß wird bei aktivem Segelmodus die Gangnachführung im Getriebe unter Aufrechterhaltung des Segelmodus in Abhängigkeit einer Drehzahl des Antriebsaggregats und in Abhängigkeit von Synchrondrehzahlen der Gänge des Getriebes durchgeführt. Um beim Ausstieg bzw. Deaktivieren eines Segelmodus des Kraftfahrzeugs schnell und komfortabel einen Gang einlegen zu können, wird eine definierte Gangnachführung im Getriebe während des aktiven Segelmodus vorgeschlagen, wobei diese Gangnachführung in Abhängigkeit der Drehzahl des Antriebsaggregats sowie weiter in Abhängigkeit von Synchrondrehzahlen der Gänge des Getriebes durchgeführt wird. Dies erlaubt bei Deaktivierung des Segelmodus ein schnelles und komfortables Gangeinlegen und damit ein schnelles und komfortables Ankoppeln des Verbrennungsmotors an den Abtrieb.

Dabei wird die Gangnachführung im Getriebe zumindest in Abhängigkeit einer Drehzahl des Antriebsaggregats und in Abhängigkeit der Synchrondrehzahl des zum jeweiligen aktuellen Segelgang des Getriebes nächsthöheren Segelgangs des Getriebes durchgeführt wird. Dann, wenn die Gangnachführung in Abhängigkeit der Synchrondrehzahl des zum jeweiligen aktuellen Segelgang des Getriebes nächsthöheren Segelgangs des Getriebes durchgeführt wird, kann die Gangnachführung besonders vorteilhaft erfolgen, um ein schnelles und komfortables Gangeinlegen im Zusammenhang mit dem Deaktivieren des Segelmodus zu ermöglichen.

In einer ersten erfindungsgemäßen Lösung wird die Gangnachführung im Getriebe weiterhin in Abhängigkeit eines Auslauf-Gradienten bzw. Austrudel-Gradienten der Drehzahl des Antriebsaggregats durchgeführt, nämlich derart, dass abhängig vom Auslauf-Gradienten der Drehzahl des Antriebsaggregats eine Ist-Zeit bestimmt wird, in welcher die Drehzahl des Antriebsaggregats die Synchrondrehzahl des zum jeweiligen aktuellen Segelgang des Getriebes nächsthöheren Segelgangs des Getriebes unterschreitet oder erreicht, und dass dann in den vom aktuellen Segelgang in den nächsthöheren Segelgang des Getriebes geschaltet wird, wenn diese Ist-Zeit kleiner wird als eine vorgegebene, applizierbare Soll-Zeit. Bei dieser zweiten Variante erfolgt die Gangnachführung zusätzlich abhängig von dem Auslauf-Gradienten der Drehzahl des Antriebsaggregats. Hiermit kann das Gangeinlegen und damit das Ankoppeln des Antriebsaggregats an den Abtrieb bei Beendigung des Segelmodus weiter verbessert werden.

In einer zweiten erfindungsgemäßen Lösung wird die Gangnachführung im Getriebe weiterhin in Abhängigkeit der Synchrondrehzahl des jeweils aktuellen Segelgangs des Getriebes und eines Hochlauf-Gradienten der Drehzahl des Antriebsaggregats durchgeführt wird, nämlich derart, dass abhängig vom Auslauf-Gradienten der Drehzahl des Antriebsaggregats eine erste Ist-Zeit bestimmt wird, in welcher die Drehzahl des Antriebsaggregats die Synchrondrehzahl des zum jeweiligen aktuellen Segelgang des Getriebes nächsthöheren Segelgangs des Getriebes unterschreitet oder erreicht, und dass abhängig vom Hochlauf-Gradienten der Drehzahl des Antriebsaggregats eine zweite Ist-Zeit bestimmt wird, in welcher die Drehzahl des Antriebsaggregats die Synchrondrehzahl des jeweiligen aktuellen Segelgangs des überschreitet oder erreicht, wobei dann vom aktuellen Segelgang in den nächsthöheren Segelgang des Getriebes geschaltet wird, wenn die erste Ist-Zeit kleiner wird als oder gleich groß wird wie die zweite Ist-Zeit. Auch mit dieser zweiten erfindungsgemäßen Lösung kann das Gangeinlegen und damit das Ankoppeln des Antriebsaggregats an den Abtrieb bei Beendigung des Segelmodus weiter verbessert werden.

Das erfindungsgemäße Steuergerät ist in Anspruch 3 definiert. Bevorzugte Weiterbildungen ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine Antriebstrangschema eines Kraftfahrzeugs;
- Fig. 2: ein Zeitdiagramm durch Verdeutlichung des aus der Praxis bekannten Verfahrens zum Betreiben eines Kraftfahrzeugs im Segelmodus;
- Fig. 3: ein erstes Zeitdiagramm durch Verdeutlichung des erfindungsgemäßen Verfahrens zum Betreiben eines Kraftfahrzeugs im Segelmodus; und
- Fig. 4: ein zweites Zeitdiagramm durch Verdeutlichung des erfindungsgemäßen Verfahrens zum Betreiben eines Kraftfahrzeugs im Segelmodus.

Die Erfindung betrifft ein Verfahren sowie ein Steuergerät zum Betreiben eines Kraftfahrzeugs.

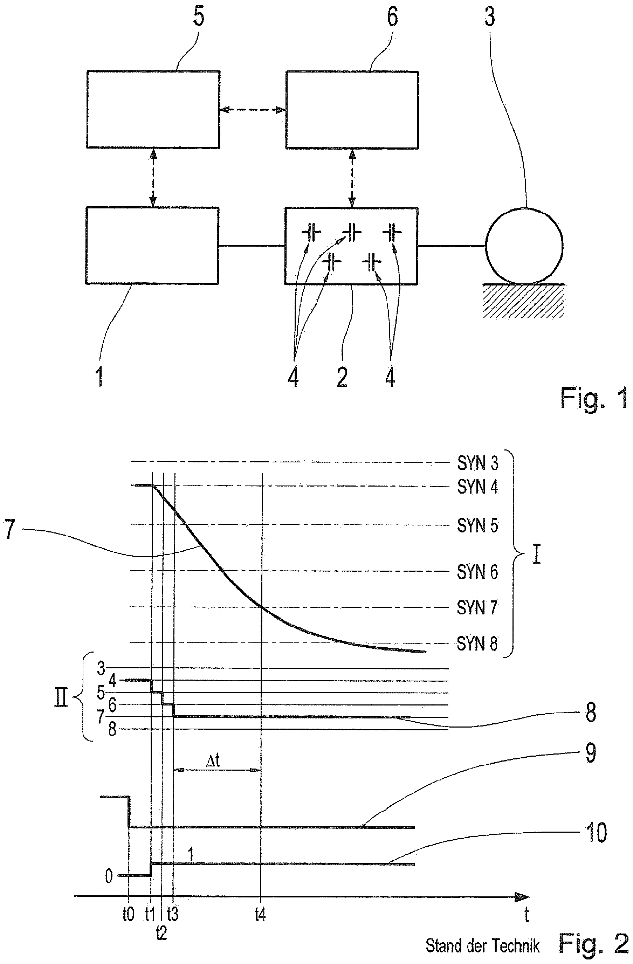

Fig. 1 zeigt ein Antriebsstrangschema eines Kraftfahrzeugs mit einem Antriebsaggregat 1, einem Getriebe 2 und einem Abtrieb 3, wobei das Getriebe 2 zwischen das Antriebsaggregat 1 und den Abtrieb 3 geschaltet ist.

Das Getriebe 2 ist als automatisches bzw. automatisiertes Schaltgetriebe ausgeführt und umfasst mehrere Schaltelemente 4, die als reibschlüssige Schaltelemente und/oder formschlüssige Schaltelemente ausgeführt sein können.

Ferner zeigt Fig. 1 ein Motorsteuergerät 5 zur Steuerung und/oder Regelung des Betriebs des Antriebsaggregats 1 und ein Getriebesteuergerät 6 zur Steuerung und/oder Regelung des Betriebs des Getriebes 2. Das Motorsteuergerät 5 tauscht mit dem Antriebsaggregat 1 und das Getriebesteuergerät 6 tauscht mit dem Getriebe 2 Daten aus. Ferner tauschen das Motorsteuergerät 5 und das Getriebesteuergerät 6 untereinander Daten aus.

Wie bereits ausgeführt, handelt es sich beim Getriebe 2 um ein automatisiertes bzw. automatisches Schaltgetriebe mit mehreren Schaltelementen 4. In jedem eingelegten Gang des Getriebes 2 ist eine erste Anzahl der Schaltelemente 4 geschlossen und eine zweite Anzahl der Schaltelemente 4 geöffnet.

In einem konkreten Ausführungsbeispiel eines Getriebes 2 mit einer Anzahl von fünf Schaltelementen kann vorgesehen sein, dass in jedem eingelegten Gang des Getriebes drei der fünf Schaltelemente geschlossen und zwei der fünf Schaltelemente geöffnet sind. Dann, wenn mehr als zwei Schaltelemente geöffnet sind, ist in diesem Fall dann die Zugkraftübertragung, ausgehend vom Antriebsaggregat 1 in Richtung an den Abtrieb 3 unterbrochen, sodass dann das Antriebsaggregat 1 vom Abtrieb 3 abgekoppelt ist.

Dann, wenn ein Kraftfahrzeug mit an den Abtrieb 3 angekoppeltem Antriebsaggregat 1 fährt und demnach im Getriebe 2 ein Gang eingelegt ist, kann unter Abhängigkeit mindestens einer Betriebsbedingung des Kraftfahrzeugs ein Segelmodus für das Kraftfahrzeug aktiviert werden.

Im Segelmodus ist bei laufendem Antriebsaggregat 1 dasselbe vom Abtrieb 3 abgekoppelt, nämlich dadurch, dass eines der zuvor geschlossenen Schaltelemente 4 des Getriebes 2 geöffnet ist.

In dem oben erwähnten Ausführungsbeispiel eines Getriebes 2 mit fünf Schaltelementen, bei welchem in jedem eingelegten Gang drei Schaltelemente geschlossen und zwei Schaltelemente geöffnet sind, bedeutet dies, dass dann im Segelmodus vorzugsweise drei Schaltelemente geöffnet und lediglich zwei Schaltelemente geschlossen sind. Ein solcher Gang, in dem das Kraftfahrzeug bei vom Abtrieb 3 abgekoppeltem Antriebsaggregat 1 segelt, indem also ein Schaltelement 4 des Getriebes 2 zu wenig geschlossen ist, wird als Segelgang bezeichnet.

Aus der Praxis ist es, wie in Fig. 2 gezeigt, bereits bekannt, nach Einstieg in einen Segelmodus des Kraftfahrzeugs eine Gangnachführung im Getriebe 2 auszuführen, nämlich unter Aufrechterhaltung des Segelmodus. So sind in Fig. 2 über der Zeit t mehrere Signalverläufe gezeigt, nämlich einerseits ein zeitlicher Verlauf einer Drehzahl 7 des Antriebsaggregats 1, ein zeitlicher Verlauf 8 eines bei aktivem Segelmodus im Getriebe 2 aktuell eingelegten Segelgangs sowie mit einem Signalverlauf 9 eine Fahrpedalbetätigung und mit einem Signalverlauf 10 ein Statussignal über einen aktiven bzw. deaktiven Segelmodus.

In Fig. 2 ändert sich zum Zeitpunkt t0 gemäß dem Signalverlauf 9 die fahrerseitige Betätigung des Fahrpedals, und zwar derart, dass ausgehend von einem vor dem Zeitpunkt t0 betätigten Fahrpedal dasselbe beginnend mit dem Zeitpunkt t0 fahrerseitig nicht mehr betätigt wird. Abhängig von dieser fahrerseitigen Fahrerpedalbetätigung und vorzugsweise abhängig von mindestens einer weiteren Betriebsbedingung des Kraftfahrzeugs wird nachfolgend zum Zeitpunkt t1 gemäß dem Signalverlauf 10 ein Segelmodus für das Kraftfahrzeug steuerungsseitig automatisch aktiviert, wobei Fig. 2 gemäß dem Signalverlauf 8 entnommen werden kann, dass im Getriebe 2 vor dem Zeitpunkt t1 und demnach auch vor dem Zeitpunkt t0 der vierte Gang eingelegt ist. In Fig. 2 sind mit SYN3 bis SYN 8 Synchrondrehzahlen I der mit II gekennzeichneten Gänge 3 bis 8 des Getriebes 2 gezeigt.

Dann, wenn gemäß Fig. 2 zum Zeitpunkt t1 der Segelmodus aktiviert wird, insbesondere dadurch, dass durch Öffnen eines weiteren Schaltelements 4 im Getriebe 2 das laufende Antriebsaggregat 1 vom Abtrieb 3 abgekoppelt wird, wird der zuvor kraftschlüssige Gang 4 zum Segelgang. In einem solchen Segelgang, in dem das Kraftfahrzeug bei vom Abtrieb 3 abgekoppeltem, laufendem Antriebsaggregat 1 segelt, ist vorzugsweise ein Schaltelement zu wenig geschlossen, um den Kraftschluss im Getriebe 2 herzstellen.

Bei aktivem Segelmodus erfolgt gemäß dem Signalverlauf 8 im Getriebe 2 eine Gangnachführung, nämlich derart, dass im Getriebe 2 unmittelbar zu den Zeitpunkten t1, t2 und t3 vom Segelgang 4 schrittweise in den Segelgang 7 hochgeschaltet wird, und zwar unter Aufrechterhaltung des Segelmodus. Hierbei ist die Zugkraft vom Antriebsaggregat 1 hin zum Abtrieb 3 unterbrochen, sodass demnach die Drehzahl 7 des Antriebsaggregats 1 frei ausläuft bzw. austrudelt.

Fig. 2 kann entnommen werden, dass die Drehzahl 7 des Antriebsaggregats 1 erst zum Zeitpunkt t4 die Synchrondrehzahl SYN7 des Gangs 7 erreicht. Nach der Praxis bzw. dem Stand der Technik vergeht demnach zwischen den Zeitpunkten t3 und t4 die Zeitspanne Δt, in welcher zwar bereits im Getriebe 2 als Segelgang der Gang 7 eingelegt ist, wobei jedoch erst mit Ablauf dieser Zeitspanne Δt zum Zeitpunkt t4 das Antriebsaggregat 1 die Drehzahl 7 erreicht, die der Synchrondrehzahl SYN7 des siebten Gangs entspricht. Dies führt dazu, dass dann, wenn vor dem Zeitpunkt t4 aufgrund mindestens einer Betriebsbedingung des Kraftfahrzeugs der Segelmodus beendet werden sollte, entweder eine relativ lange Zeit bis zum Erreichen der zum eingelegten Segelgang passenden Synchrondrehzahl vergeht oder das Gangeinlegen im Getriebe 2 unkomfortabel erfolgen muss.

Die hier vorliegende Erfindung betrifft nun solche Details einer Gangnachführung im Getriebe 2 bei aktivem Segelmodus des Kraftfahrzeugs, mit Hilfe derer dann, wenn der Segelmodus beendet werden soll, ein schnelleres und komfortableres Schließen der Zugkraft und demnach ein schnelleres und komfortableres Ankoppeln des Antriebsaggregats 1 an den Abtrieb 3 möglich ist.

Erfindungsgemäß erfolgt die Gangnachführung im Getriebe 2 bei aktivem Segelmodus im Getriebe 2 in Abhängigkeit der Drehzahl des Antriebsaggregats 1 sowie in Abhängigkeit von Synchrondrehzahlen der Gänge des Getriebes 2. Als Synchrondrehzahlen der Gänge des Getriebes 2, in Abhängigkeit derer die Gangnachführung im Getriebe 2 durchgeführt wird, kann die Synchrondrehzahl des jeweils aktuellen Segelgangs des Getriebes 2 und/oder die Synchrondrehzahl des zum jeweiligen aktuellen Segelgangs des Getriebes 2 nächsthöheren Segelgangs des Getriebes 2 berücksichtigt werden.

Nach der Erfindung wird die Gangnachführung im Getriebe 2 bei aktivem Segelmodus in Abhängigkeit der Drehzahl des Antriebsaggregats 1 sowie weiterhin in Abhängigkeit der Synchrondrehzahl des zum jeweiligen aktuellen Segelgangs des Getriebes 2 nächsthöheren Segelgangs des Getriebes 2 durchgeführt.

Dabei ist nach einer nicht beanspruchten ersten Variante vorgesehen, dass die Gangnachführung im Getriebe 2 bei aktivem Segelmodus derart erfolgt, dass dann vom aktuellen Segelgang in den nächsthöheren Segelgang des Getriebes 2 geschaltet wird, wenn die Drehzahl des Antriebsaggregats die Synchrondrehzahl des zum jeweiligen aktuellen Segelgangs des Getriebes 2 nächsthöheren Segelgangs des Getriebes 2 unterschreitet oder erreicht.

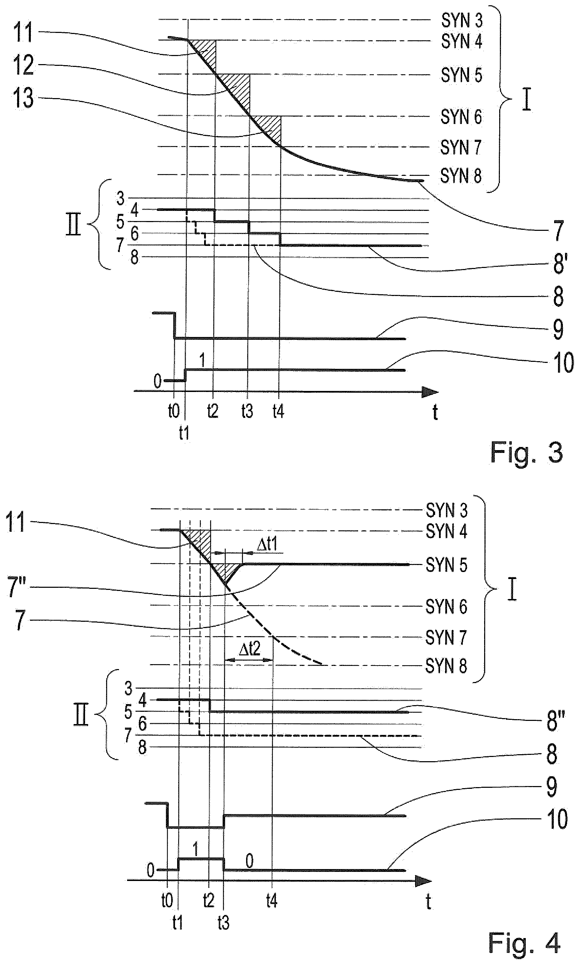

Details der nicht beanspruchten Variante werden nachfolgend unter Bezugnahme auf Fig. 3 und 4 beschrieben, wobei in Fig. 3 und 4 über der Zeit t wiederum mehrere zeitliche Signalverläufe gezeigt sind, nämlich mit dem Signalverlauf 7 ein Drehzahlverlauf des Antriebsaggregats 1, mit den Signalverläufen 8, 8' und 8" Signalverläufe von Gangnachführungen im Getriebe 2, mit dem Signalverlauf 9 Signalverläufe einer fahrerseitigen Fahrpedalbetätigung und mit dem Signalverlauf 10 Signalverläufe eines Statussignals über einen aktiven oder inaktiven Segelmodus, wobei der Staus 0 einem steuerungsseitig inaktiven Segelmodus und der Staus 1 einem steuerungsseitig aktiven Segelmodus entspricht.

In Fig. 3 und 4 sind mit I Synchrondrehzahlen SYN3, SYN4, SYN5, SYN6, SYN7 und SYN8 von Gängen 3 bis 8 des Getriebes 2 gezeigt, wobei mit II die Gänge 3 bis 8 des Getriebes 2 visualisiert sind.

In Fig. 3 ändert sich zum Zeitpunkt t0 gemäß dem Signalverlauf 9 eine fahrerseitige Fahrpedalbetätigung, ausgehend von einem betätigten Fahrpedal in Richtung auf ein unbetätigtes Fahrpedal. Abhängig von dieser Betriebsbedingung des Kraftfahrzeugs sowie mindestens einer weiteren Betriebsbedingung des Kraftfahrzeugs wird gemäß dem Signalverlauf 10 zum Zeitpunkt t1 ein Segelmodus für das Kraftfahrzeug aktiviert, wobei gemäß dem Signalverlauf 8' das Kraftfahrzeug vor dem Zeitpunkt t1 mit im Getriebe 2 eingelegtem Gang 4 fährt.

Mit Aktivierung des Segelbetriebsmodus zum Zeitpunkt t1 wird zunächst die Zugkraft im Getriebe 2 unterbrochen, in dem ein zuvor bei eingelegtem Gang 4 geschlossenes Schaltelement des Getriebes 2 geöffnet wird, sodass dann im Getriebe 2 als Segelgang 4 zum Gang 4 passende Schaltelemente geschlossen sind, vorzugsweise ein einziges weniger, als für einen Kraftschluss im Gang 4 erforderlich ist. Wie bereits ausgeführt ist in einem Segelgang, in dem das Kraftfahrzeug bei vom Abtrieb 3 abgekoppeltem, laufendem Antriebsaggregat 1 segelt, vorzugsweise ein Schaltelement zu wenig geschlossen, um den Kraftschluss im Getriebe 2 herzstellen.

Im Unterschied zum Stand der Technik, der durch den Signalverlauf 8 gekennzeichnet ist, wird nach der nicht beanspruchten Variante nicht unmittelbar in höhere Segelgänge hochgeschaltet, vielmehr erfolgt in Fig. 3 die Gangnachführung im Getriebe 2 gemäß dem Signalverlauf 8' einerseits abhängig von der Drehzahl 7 des Antriebsaggregats 1, die bei vom Abtrieb 3 abgekoppeltem Antriebsaggregat 1 frei ausläuft bzw. frei austrudelt, sowie in Abhängigkeit der Synchrondrehzahlen der zum jeweiligen aktuellen Segelgang des Getriebes 2 nächsthöheren Segelgangs des Getriebes 2 gehören. So wird gemäß Fig. 3 dann von dem aktuellen Segelgang des Getriebes 2 in den nächsthöheren Segelgang geschaltet, wenn die Drehzahl 7 des Antriebsaggregats 1 die Synchrondrehzahl des zum jeweiligen Segelgang des Getriebes 2 nächsthöheren Segelgangs des Getriebes 2 unterschreitet oder erreicht.

So zeigt Fig. 3, dass zum Zeitpunkt t2 die Drehzahl 7 des Antriebsaggregats 1 die Synchrondrehzahl SYN5 des vor dem Zeitpunkt t2 aktuellen Segelgangs 4 nächsthöheren Segelgangs 5 erreicht bzw. unterschreitet, sodass dann der ersten Variante der ersten Weiterbildung der Erfindung zum Zeitpunkt t2 vom Segelgang 4 in den Segelgang 5 im Getriebe 2 gewechselt wird. Der Segelgang 5 bleibt dann beginnend mit dem Zeitpunkt t2 so lange im Getriebe 2 vorgewählt bzw. eingelegt, bis zum Zeitpunkt t3 die Drehzahl 7 des Antriebsaggregats 1 die Synchrondrehzahl SYN6 des zum aktuellen Segelgang 5 nächsthöheren Segelgangs 6 erreicht bzw. unterschreitet. Erst dann wird zum Zeitpunkt t3 vom Segelgang 5 in den Segelgang 6 im Getriebe 2 gewechselt. Beginnend zum Zeitpunkt t3 bleibt dann im Getriebe 2 der Segelgang 6 so lange eingelegt, bis die Drehzahl 7 des Antriebsaggregats 1 zum Zeitpunkt t4 die Synchrondrehzahl SYN7 des bis dahin gültigen bzw. vorgewählten bzw. aktuellen Segelgangs 6 nächsthöheren Segelgangs 7 erreicht bzw. unterschreitet, sodass demnach zum Zeitpunkt t4 im Getriebe 2 vom Segelgang 6 in den Segelgang 7 gewechselt wird. Dies folgt aus dem Signalverlauf 8' der Fig. 3, der diese Gangnachführung visualisiert. Der Gang 8 soll zum Segeln nicht genutzt werden.

Bedingt durch diese Gangnachführung bei aktivem Segelmodus unter Aufrechterhaltung des Segelmodus wird demnach in Fig. 3 zwischen den Zeitpunkten t1 und t2 visualisiert durch den Bereich 11 abhängig von der Drehzahl 7 des Antriebsaggregats 1 sowie abhängig von der Synchrondrehzahl SYN des zum jeweiligen aktuellen Segelgang nächsthöheren Gangs des Getriebes 2 im Segelbetriebsmodus eine Hochschaltung vom Segelgang 4 in den Segelgang 5 verhindert. Der Bereich 12 visualisiert eine entsprechende Hochschaltverhinderung vom Segelgang 5 in den Segelgang 6 und der Bereich 13 eine entsprechende Hochschaltverhinderung vom Segelgang 6 in den Segelgang 7.

Fig. 3 zeigt zeitliche Signalverläufe für die nicht beanspruchte Variante, in welchen der Segelbetriebsmodus gemäß dem Signalverlauf 10 über der Zeit t nach dem Zeitpunkt t1 aktiv bleibt. Demgegenüber zeigt Fig. 4 korrespondierende zeitliche Signalverläufe, für den Fall, in welchem beginnend mit dem Zeitpunkt t3 zum Beispiel abhängig von der sich zum Zeitpunkt t3 ereignenden Betätigung des Fahrpedals der Segelmodus deaktiviert bzw. beendet wird.

Die Signalverläufe der Fig. 4 entsprechen bis zum Zeitpunkt t3 den Signalverläufen der Fig. 3, wobei jedoch in Fig. 3 zum Zeitpunkt t3 gemäß dem Signalverlauf 9 fahrerseitig ein Fahrpedal betätigt wird, wodurch zum Zeitpunkt t3 gemäß dem Signalverlauf 10 der Segelmodus deaktiviert wird. Dabei ist gemäß Fig. 3 zum Zeitpunkt t3 im Getriebe 2 als Segelgang der Gang 5 vorgewählt bzw. eingelegt.

Dann, wenn zum Zeitpunkt t3 der Segelmodus beendet werden soll, erfolgt bedingt durch die nach der nicht beanspruchten Variante gewählte Gangnachführung 8" bzw. 8' im Getriebe 2 der Ausstieg aus dem Segelmodus immer mit positivem Gradienten der Drehzahl 7 des Antriebsaggregats 1, in Fig. 4 visualisiert durch den Drehzahlverlauf 7", sodass demnach die Drehzahl 7" des Antriebsaggregats 1 mit Beendigung des Segelmodus zum Zeitpunkt t3 auf die Synchrondrehzahl SYN5 des im Getriebe 2 aktuell eingelegten Segelgangs 5 angehoben werden muss, um nachfolgend nach Erreichen dieser Synchrondrehzahl den Kraftschluss im Getriebe 2 komfortabel aufzubauen bzw. herzustellen.

Mit Beendigung des Segelmodus zum Zeitpunkt t3 muss demnach nur die Zeitspanne Δt1 abgewartet werden, bis für den zum Zeitpunkt t3 im Getriebe 2 nachgeführten, aktuellen Segelgang 5 die Synchrondrehzahl am Antriebsaggregat 1 erreicht wurde. Wäre hingegen gemäß dem Signalverlauf 8 nach dem Stand der Technik unmittelbar nach Aktivierung des Segelmodus in den Segelgang 7 hochgeschaltet worden, so müsste die Zeitspanne Δt2 abgewartet werden, bis die Drehzahl 7 des Antriebsaggregats 1 die entsprechende Synchrondrehzahl erreicht hätte. Mit der nicht beanspruchten Variante kann demnach die Differenz zwischen der Zeitspanne Δt2 und der Zeitspanne Δt1 als Zeitgewinn realisiert werden.

Die nicht beanspruchte Variante erlaubt demnach gegenüber dem Stand der Technik ein schnelleres Bereitstellen der Synchronbedingung für den aktuell im Getriebe nachgeführten Segelgang, sodass bei Beendigung bzw. Deaktivierung des Segelmodus das Antriebsaggregats 1 schneller und komfortabler an den Abtrieb 3 angekoppelt werden kann.

Nach der unter Bezugnahme auf Fig. 3 und 4 beschriebenen nicht beanspruchten Variante, nach welcher die Gangnachführung im Getriebe 2 bei aktivem Segelmodus abhängig von der Drehzahl 7 des Antriebsaggregats 1 und abhängig von der Synchrondrehzahl SYN des zum jeweiligen aktuellen Segelgang nächsthöheren Gangs bzw. Segelgangs des Getriebes 2 derart durchgeführt wird, dass immer dann in den nächsthöheren Segelgang des Getriebes gewechselt wird, wenn die Drehzahl des Antriebsaggregats 1 die Synchrondrehzahl des zum jeweiligen aktuellen Segelgang nächsthöheren Gangs bzw. Segelgangs unterschreitet oder erreicht, erfolgt der Ausstieg aus der Segelfunktion demnach immer mit positivem Gradienten der Drehzahl des Antriebsaggregats 1.

Nach einer ersten Variante der Erfindung erfolgt die Gangnachführung im Getriebe 2 nicht nur abhängig von der Drehzahl 7 des Antriebsaggregats 1 und abhängig von der Synchrondrehzahl des zum jeweiligen aktuellen Segelgang des Getriebes nächsthöheren Gangs bzw. Segelgangs des Getriebes 2, sondern vielmehr zusätzlich abhängig von dem Auslauf- bzw. Austrudel-Gradienten der Drehzahl 7 des Antriebsaggregats 1, der steuerungsseitig bekannt ist. Nach dieser Variante der Erfindung wird, abhängig vom Auslauf- bzw. Austrudel-Gradienten der Drehzahl 7 des Antriebsaggregats 1 eine Ist-Zeit bestimmt, in welcher die Drehzahl 7 des Antriebsaggregats 1 die Synchrondrehzahl SYN des zum jeweiligen aktuellen Segelgang des Getriebes 1 nächsthöheren Gangs bzw. Segelgangs desselben unterschreitet oder erreicht. Für diese Zeit wird steuerungsseitig eine applizierbare Soll-Zeit bzw. Maximal-Zeit vorgegeben. Dann, wenn die Ist-Zeit kleiner als die vorgegebene, applizierbare Soll-Zeit wird oder diese erreicht, wird nach dieser Variante der Erfindung vom aktuellen Segelgang in den nächsthöheren Segelgang des Getriebes geschaltet. Das bedeutet, dass nach dieser Variante der Erfindung früher in den nächsthöheren Segelgang geschaltet wird als nach der unter Bezugnahme auf Fig. 3 und 4 beschriebenen ersten Variante, nämlich um die applizierbare Soll-Zeit früher. Dies kann auch so interpretiert werden, dass in der unter Bezugnahme auf Fig. 3 und 4 beschriebenen nicht beanspruchten Variante diese Soll-Zeit mit Null Sekunden appliziert ist.

Nach der ersten Variante der Erfindung wird danach die Zeit eine maximale Zeit zum Austrudeln der Drehzahl des Antriebsaggregats auf die Synchrondrehzahl des zum jeweiligen aktuellen Segelgang des Getriebes nächsthöheren Gangs bzw. Segelgangs vorgegeben und erst dann in den nächsthöheren Gang bzw. Segelgang gewechselt, wenn mit dem Auslauf-Gradienten der Drehzahl des Antriebsaggregats die Synchrondrehzahl innerhalb dieser maximale Zeit erreicht werden kann.

Nach einer zweiten Variante der Erfindung erfolgt die Gangnachführung im Getriebe 2 bei aktivem Segelmodus abhängig von der Drehzahl 7 des Antriebsaggregats 1, abhängig vom Auslauf- bzw. Austrudel-Gradienten der Drehzahl 7 des Antriebsaggregats 1, abhängig von einem Hochlauf-Gradienten der Drehzahl 7 des Antriebsaggregats 1 sowie abhängig von den Synchrondrehzahlen des aktuellen Segelgangs sowie des zum aktuellen Segelgang nächsthöheren Gangs bzw. Segelgangs des Getriebes 2. Nach dieser dritten Variante wird abhängig vom Auslauf- bzw. Austrudel-Gradienten der Drehzahl 7 des Antriebsaggregats 1 eine erste Ist-Zeit bestimmt, in welcher die Drehzahl 7 des Antriebsaggregats 1 bei vom Abtrieb 3 abgekoppeltem Antriebsaggregat 1 die Synchrondrehzahl des zum jeweiligen aktuellen Segelgang nächsthöheren Gangs des Getriebes 2 unterschreitet oder erreicht. Ebenso wird abhängig von einem steuerungsseitig bekannten Hochlauf-Gradienten der Drehzahl 7 des Antriebsaggregats 1, der sich bei Befeuerung des Antriebsaggregats 1 ausbildet, eine zweite Ist-Zeit bestimmt, in welcher die Drehzahl 7 des Antriebsaggregats 1 die Synchrondrehzahl des jeweiligen aktuellen Segelgangs überschreitet oder erreicht. Es wird dann vom aktuellen Segelgang in den nächsthöheren Segelgang des Getriebes geschaltet, wenn die erste Ist-Zeit kleiner wird wie die zweite Ist-Zeit oder die erste Ist-Zeit gleich groß wird wie die zweite Ist-Zeit.

Nach der zweiten Variante der Erfindung wird danach dann in den nächsthöheren Segelgang geschaltet, wenn die Zeit zum Erreichen der Synchrondrehzahl im nächsthöheren Segelgang kürzer ist oder wird als die Zeit zum Erreichen der Synchrondrehzahl im aktuellen Segelgang mittels positivem Gradienten der Drehzahl des Antriebsaggregats 1.

Nach der Erfindung ist vorgesehen, dass die Gangnachführung im Getriebe 2 bei aktivem Segelmodus abhängig von der Drehzahl des Antriebsaggregats 1 sowie abhängig von der Synchrondrehzahl des jeweils aktuellen Segelgangs im Getriebe durchgeführt wird. So wird dann eine Gangnachführung vom aktuellen Segelgang in den nächsthöheren Segelgang vorgenommen und vom aktuellen Segelgang in den nächsthöheren Segelgang geschaltet, wenn die Drehzahl des Antriebsaggregats 1 die Synchrondrehzahl des aktuellen Segelgangs des Getriebes 2 unterschreitet oder erreicht. Die Erfindung bewirkt, am frühesten vom aktuellen Segelgang in den nächsthöheren Segelgang zu wechseln.

Dies führt dazu, dass bei Deaktivierung des Segelmodus und demnach beim Ausstieg aus dem Segelmodus sich immer ein fallender Gradient der Antriebsaggregatdrehzahl ausbildet, wohingegen in der unter Bezugnahme auf Fig. 3 und 4 beschriebenen nicht beanspruchten Variante ein Ausstieg aus der Segelfunktion immer zu einem positiven Gradienten der Antriebsaggregatdrehzahl führt.

In allen Varianten der Erfindung werden Hochschaltungen der Gangnachführung in den jeweils nächsten Segelgang gegenüber der aus der Praxis bekannten Vorgehensweise zeitlich verzögert. Während diese Verzögerung in der nicht beanspruchten Variante gemäß Fig. 3 und 4 am längsten ist, ist diese Verzögerung nach der ersten Variante und der zweiten Variante der Erfindung kürzer.

Die erfindungsgemäße Gangnachführung wird nach Einstieg in den Segelbetriebsmodus des Kraftfahrzeugs aktiv. Die erfindungsgemäße Gangnachführung wird beendet, wenn bei aktivem Segelmodus entweder ein Ausstieg aus dem Segelmodus gefordert wird oder wenn der höchste im Segelbetrieb angeforderte Segelgang erreicht ist, im gezeigten Ausführungsbeispiel der Gang 7.

Ferner kann vorgesehen sein, dass eine sich erfindungsgemäß ausbildende Hochschaltverhinderung bei der Gangnachführung im Getriebe 2 bei aktivem Segelmodus auf eine maximale Zeitdauer begrenzt wird. Wird diese maximale Zeitdauer erreicht, so wird eine Hochschaltung in den nächsthöheren Segelgang auch dann ausgeführt, wenn die oben erwähnten Bedingungen steuerungsseitig nicht erfüllt sind.

Das erfindungsgemäße Verfahren wird vom Getriebesteuergerät 6 ausgeführt. Das Getriebesteuergerät 6 führt demnach die oben beschriebene Gangnachführung im Getriebe 2 bei aktivem Segelmodus unter Aufrechterhaltung des Segelmodus in Abhängigkeit einer Drehzahl des Antriebsaggregats 1 und in Abhängigkeit von Synchrondrehzahlen der Gänge des Getriebes 2 aus.

### Bezugszeichen

- 1: Antriebsstrang
- 2: Antriebsaggregat
- 3: Getriebe
- 4: Abtrieb
- 5: Motorsteuergerät
- 6: Getriebesteuergerät
- 7: Drehzahl
- 8: Gangnachführung
- 9: Fahrpedalbetätigung
- 10: Statussignal Segelmodus

## Patentansprüche

1. Verfahren zum Betreiben eines Kraftfahrzeugs, mit einem Antriebsaggregat (1), einem Getriebe (2) und einem Abtrieb (3), wobei das Getriebe (2) als automatisches bzw. automatisiertes Schaltgetriebe ausgebildet und zwischen das Antriebsaggregat (1) und den Abtrieb (3) geschaltet ist, wobei abhängig von mindestens einer Betriebsbedingung des Kraftfahrzeugs ein Segelmodus desselben aktiviert und nachfolgend abhängig von mindestens einer Betriebsbedingung des Kraftfahrzeugs wieder deaktiviert wird, wobei bei aktivem Segelmodus im Getriebe (2) ein Gang unter Aufrechterhaltung des Segelmodus nachgeführt wird,
wobei die Gangnachführung im Getriebe (2) in Abhängigkeit einer Drehzahl des Antriebsaggregats (1) und in Abhängigkeit der Synchrondrehzahl eines jeweils aktuellen Segelgangs des Getriebes (2) und der auch in Abhängigkeit der Synchrondrehzahl eines zum jeweiligen aktuellen Segelgang des Getriebes (2) nächsthöheren Segelgangs des Getriebes (2) durchgeführt wird,
**dadurch gekennzeichnet, dass** die Gangnachführung im Getriebe (2) weiterhin in Abhängigkeit eines Auslauf-Gradienten der Drehzahl des Antriebsaggregats (1) durchgeführt wird, wobei abhängig vom Auslauf-Gradienten der Drehzahl des Antriebsaggregats (1) eine Ist-Zeit bestimmt wird, in welcher die Drehzahl des Antriebsaggregats (2) die Synchrondrehzahl des zum jeweiligen aktuellen Segelgang des Getriebes nächsthöheren Segelgangs des Getriebes (2) unterschreitet oder erreicht, und wobei dann vom aktuellen Segelgang in den nächsthöheren Segelgang des Getriebes (2) geschaltet wird, wenn diese Ist-Zeit kleiner wird als eine vorgegebene, applizierbare Soll-Zeit.

2. Verfahren nach dem Oberbegriff von Anspruch 1, **dadurch gekennzeichnet, dass** die Gangnachführung im Getriebe (2) weiterhin in Abhängigkeit eines Auslauf-Gradienten der Drehzahl des Antriebsaggregats (1) und weiterhin in Abhängigkeit der Synchrondrehzahl des jeweils aktuellen Segelgangs des Getriebes (2) und eines Hochlauf-Gradienten der Drehzahl des Antriebsaggregats (1) durchgeführt wird, wobei abhängig vom Auslauf-Gradienten der Drehzahl des Antriebsaggregats (1) eine erste Ist-Zeit bestimmt wird, in welcher die Drehzahl des Antriebsaggregats (1) die Synchrondrehzahl des zum jeweiligen aktuellen Segelgang des Getriebes (2) nächsthöheren Segelgangs des Getriebes (2) unterschreitet oder erreicht, und wobei abhängig vom Hochlauf-Gradienten der Drehzahl des Antriebsaggregats (1) eine zweite Ist-Zeit bestimmt wird, in welcher die Drehzahl des Antriebsaggregats (1) die Synchrondrehzahl des jeweiligen aktuellen Segelgangs des Getriebes (2) überschreitet oder erreicht, wobei dann vom aktuellen Segelgang in den nächsthöheren Segelgang des Getriebes (2) geschaltet wird, wenn die erste Ist-Zeit kleiner wird als oder gleich groß wird wie die zweite Ist-Zeit.

3. Steuergerät (6) zum Betreiben eines Kraftfahrzeugs, mit einem Antriebsaggregat (1), einem Getriebe (2) und einem Abtrieb (3), wobei das Getriebe (2) als automatisches bzw. automatisiertes Schaltgetriebe ausgebildet und zwischen das Antriebsaggregat (1) und den Abtrieb (3) geschaltet ist, wobei das Steuergerät (6) Befehle ausführt, die bewirken, dass das Kraftfahrzeug nach einem Verfahren nach einem der Ansprüche 1 oder 2 betrieben wird.

## Claims

1. Method for operating a motor vehicle, having a drive assembly (1), a transmission (2) and a drive output (3), wherein the transmission (2) is configured as an automatic transmission or automated manual transmission and is connected between the drive assembly (1) and the drive output (3), wherein, in a manner dependent on at least one operating condition of the motor vehicle, a coasting mode thereof is activated, and subsequently, in a manner dependent on at least one operating condition of the motor vehicle, said coasting mode is deactivated again, wherein, when the coasting mode is active, a gear ratio in the transmission (2) is updated whilst the coasting mode is maintained,
wherein the gear ratio updating in the transmission (2) is performed in a manner dependent on a rotational speed of the drive assembly (1) and in a manner dependent on the synchronous rotational speed of a respectively present coasting gear ratio of the transmission (2) and also in a manner dependent on the synchronous rotational speed of a next higher coasting gear ratio of the transmission (2) in relation to the respectively present coasting gear ratio of the transmission (2), **characterized in that** the gear ratio updating in the transmission (2) is furthermore performed in a manner dependent on a run-down gradient of the rotational speed of the drive assembly (1), wherein, in a manner dependent on the run-down gradient of the rotational speed of the drive assembly (1), an actual time is determined at which the rotational speed of the drive assembly (2) undershoots or reaches the synchronous rotational speed of the next higher coasting gear ratio of the transmission (2) in relation to the respective present coasting gear ratio of the transmission, and wherein a shift is performed from the present coasting gear ratio into the next higher coasting gear ratio of the transmission (2) if said actual time becomes shorter than a specified applicable setpoint time.

2. Method according to the preamble of Claim 1, **characterized in that** the gear ratio updating in the transmission (2) is performed furthermore in a manner dependent on a run-down gradient of the rotational speed of the drive assembly (1) and furthermore in a manner dependent on the synchronous rotational speed of the respectively present coasting gear ratio of the transmission (2) and on a run-up gradient of the rotational speed of the drive assembly (1), wherein, in a manner dependent on the run-down gradient of the rotational speed of the drive assembly (1), a first actual time is determined at which the rotational speed of the drive assembly (1) undershoots or reaches the synchronous rotational speed of the next higher coasting gear ratio of the transmission (2) in relation to the respective present coasting gear ratio the transmission (2), and wherein, in a manner dependent on the run-up gradient of the rotational speed of the drive assembly (1), a second actual time is determined at which the rotational speed of the drive assembly (1) overshoots or reaches the synchronous rotational speed of the respective present coasting gear ratio of the transmission (2), wherein a shift is performed from the present coasting gear ratio into the next higher coasting gear ratio of the transmission (2) if the first actual time becomes shorter than or equal to the second actual time.

3. Control unit (6) for operating a motor vehicle, having a drive assembly (1), a transmission (2) and a drive output (3), wherein the transmission (2) is configured as an automatic transmission or automated manual transmission and is connected between the drive assembly (1) and the drive output (3), wherein the control unit (6) executes commands that cause a motor vehicle to be operated in accordance with the method according to either of Claims 1 and 2.

## Revendications

1. Procédé permettant de faire fonctionner un véhicule automobile, comprenant un groupe moteur (1), une transmission (2) et un entraînement de sortie (3), la transmission (2) étant réalisée sous la forme d'une boîte de vitesses automatique ou automatisée et étant connectée entre le groupe moteur (1) et l'entraînement de sortie (3), dans lequel, en fonction d'au moins une condition de fonctionnement du véhicule automobile, un mode roue libre de celui-ci est activé et ensuite à nouveau désactivé en fonction d'au moins une condition de fonctionnement du véhicule automobile, dans lequel, en mode roue libre actif, un rapport dans la transmission (2) est poursuivi en maintenant le mode roue libre,
dans lequel la poursuite de rapport dans la transmission (2) est effectuée en fonction d'une vitesse de rotation du groupe moteur (1) et en fonction de la vitesse de rotation synchrone d'un rapport en roue libre respectivement actuel de la transmission (2) et également en fonction de la vitesse de rotation synchrone d'un rapport en roue libre de la transmission (2) immédiatement supérieur au rapport en roue libre actuel respectif de la transmission (2),
**caractérisé en ce que** la poursuite de rapport dans la transmission (2) est toujours effectuée en fonction d'un gradient de décélération de la vitesse de rotation du groupe moteur (1), dans lequel, en fonction du gradient de décélération de la vitesse de rotation du groupe moteur (1), un temps réel est déterminé dans lequel la vitesse de rotation du groupe moteur (2) soupasse ou atteint la vitesse de rotation synchrone du rapport en roue libre de la transmission (2) immédiatement supérieur au rapport en roue libre actuel respectif de la transmission, et dans lequel, on passe alors du rapport en roue libre actuel au rapport en roue libre immédiatement supérieur de la transmission (2) si ce temps réel devient inférieur à un temps théorique applicable prédéfini.

2. Procédé selon le préambule de la revendication 1, **caractérisé en ce que** la poursuite de rapport dans la transmission (2) continue à être effectuée en fonction d'un gradient de décélération de la vitesse de rotation du groupe moteur (1) et continue à être effectuée en fonction de la vitesse de rotation synchrone du rapport en roue libre respectivement actuel de la transmission (2) et d'un gradient d'accélération de la vitesse de rotation du groupe moteur (1), dans lequel, en fonction du gradient de décélération de la vitesse de rotation du groupe moteur (1), un premier temps réel est déterminé pendant lequel la vitesse de rotation du groupe moteur (1) soupasse ou atteint la vitesse de rotation synchrone du rapport en roue libre de la transmission (2) immédiatement supérieur au rapport en roue libre actuel respectif de la transmission (2), et dans lequel, en fonction du gradient d'accélération de la vitesse de rotation du groupe moteur (1), un deuxième temps réel est déterminé pendant lequel la vitesse de rotation du groupe moteur (1) dépasse ou atteint la vitesse de rotation synchrone du rapport en roue libre actuel respectif de la transmission (2), dans lequel on passe alors du rapport en roue libre actuel au rapport en roue libre immédiatement supérieur de la transmission (2) si le premier temps réel est inférieur ou égal au deuxième temps réel.

3. Appareil de commande (6) permettant de faire fonctionner un véhicule automobile, comprenant un groupe moteur (1), une transmission (2) et un entraînement de sortie (3), la transmission (2) étant réalisée sous la forme d'une boîte de vitesses automatique ou automatisée et étant connectée entre le groupe moteur (1) et l'entraînement de sortie (3),
l'appareil de commande (6) exécutant des commandes qui font que le véhicule automobile fonctionne selon un procédé selon l'une quelconque des revendications 1 ou 2.
